# EUROPÄISCHE PATENTANMELDUNG

(11) **EP 1 014 459 A1**
(43) Veröffentlichungstag der Anmeldung: **28.06.2000**
(21) Anmeldenummer: 99114389.2
(22) Anmeldetag: 22.07.1999
(51) Int. Cl.: H01M 2/10

(54) **Batteriepack**

(30) Priorität: 22.12.1998 DE 19859326
(71) Anmelder: ROBERT BOSCH GMBH, 70442 Stuttgart (DE)
(72) Erfinder: Kunze, Peter, 38304 Wolfenbuettel (DE); Laue, Frank, 38321 Denkte (DE)

(57) **Zusammenfassung**

Um bei einem Batteriepack mit wenigstens einer in einem Schutzbehältnis angeordneten elektrochemischen Sekundärzelle Größe und Gewicht reduzieren zu können und den Batteriepack in einem elektrischen Gerät optional gegen Standardzellen tauschen zu können, wird vorgeschlagen als Schutzbehältnis eine mit einer Öffnung versehene Hülse vorzusehen und eine elektrochemische Sekundärzelle in die Hülse derart einzusetzn, daß eine erste Elektrode der Sekundärzelle an der Öffnung von außen kontaktierbar ist, wobei die Abmessungen des aus Hülse und Sekundärzelle gebildeten Batteriepacks den Abmessungen einer elektrochemischen Standard-Primärzelle oder Standard-Sekundärzelle entsprechen.

## Beschreibung

### Stand der Technik

Die Erfindung betrifft einen Batteriepack mit den im Oberbegriff des Anspruchs 1 angegebenen Merkmalen.

Elektrochemische Sekundärzellen, die wieder aufgeladen werden können, werden zur Energieversorgung in mobilen Geräten, wie beispielsweise mobilen Telefonen verwandt. Dabei werden insbesondere Nickel-Cadmium-Zellen oder Nickel-Metallhydrid-Zellen, welche einen geringen Innenwiderstand aufweisen, zunehmend als Energiequelle eingesetzt. Im Störfall, beispielsweise einem inneren Kurzschluß der Zelle, führt der Kurzschlußstrom der Zelle zu extrem hohen Temperaturen, welche in Abhängigkeit von Zellentyp und Zustand 200°C überschreiten können. Geräte für den bestimmungsgemäßen Einsatz in explosionsgefährdeten Bereichen, beispielsweise in der chemischen Industrie dürfen an Bauteilen und Gehäuseoberflächen festgelegte Temperaturen aus Sicherheitsgründen nicht überschreiten. Dies gilt sowohl für den normalen Betrieb als auch einen eventuellen Störfall. Bekannte Batteriepacke umfassen beispielsweise ein als Spritzgußteil hergestelltes Schutzbehältnis, welches mehrere mit Kunststoff umspritzte Kühlbleche aufweist. In das Schutzbehältnis sind mehrere Sekundärzellen eingesetzt und mit einer schlecht wärmeleitenden Vergußmasse verkapselt. Nachteilig dabei ist vor allem das hohe Gewicht und der große Platzbedarf des voluminösen Batteriepacks. Für kleine mobile elektrische Geräte sind derartige Batteriepacke daher nur schlecht geeignet. Weiterhin ist nachteilig, daß ohne Abwandlung der Batterieaufnahme des Gerätes ein Austausch des Batteriepacks durch ungeschützte elektrochemische Primärzellen mit höheren Innenwiderständen, wie beispielsweise herkömmliche Mignon-Alkali-Mangan-Zellen, nicht möglich ist.

### Vorteile der Erfindung

Der erfindungsgemäße Batteriepack vermeidet die im Stand der Technik bekannten Nachteile und weist vorteilhaft als Schutzbehältnis eine mit einer Öffnung versehene Hülse auf, in die eine elektrochemische Sekundärzelle durch die Öffnung derart eingesetzt ist, daß die erste Elektrode der Sekundärzelle an der Öffnung von außen kontaktierbar ist, wobei die Abmessungen des aus Hülse und Sekundärzelle gebildeten Batteriepacks den Abmessungen einer Standard-Primärzelle oder Standard-Sekundärzelle entsprechen.

Die Hülse nimmt im Falle eines inneren oder äußeren Kurzschlusses der Sekundärzelle vorteilhaft einen Großteil der dabei entstehenden Wärme auf und gibt diese erst allmählich an die Umgebung ab. Dadurch kann der Batteriepack vorteilhaft auch in explosionsgefährdeten Bereichen eingesetzt werden. Durch den erfindungsgemäßen Batteriepack wird dabei nicht nur verhindert, daß bei einem mobilen elektrischen Gerät, in welches der Batteriepack als Energiequelle eingesetzt ist, die zulässige Oberflächentemperatur überschritten wird, sondern auch gleichzeitig erreicht, daß an Stelle des Batteriepacks eine herkömmliche Standard-Primärzelle als Energiequelle problemlos in das Gerät eingesetzt werden kann, falls die Sekundärzelle des Batteriepacks einmal nicht rechtzeitig wieder aufgeladen werden konnte. Vorteilhaft entsprechen die Abmessungen und Kontakte des Batteriepacks den Abmessungen einer Standardzelle, so daß der Batteriepack oder optional eine Standard-Primärzelle, beispielsweise eine gewöhnliche Mignon-Zelle, in die gleiche Batterieaufnahme des Gerätes eingesetzt werden können. Der Batteriepack weist ein geringes Gewicht auf und ist sehr preiswert und einfach herstellbar.

Vorteilhafte Ausgestaltungen und Weiterbildungen der Erfindung sind in den Unteransprüchen dargestellt.

Vorteilhaft ist die Hülse des Batteriepacks aus Metall gefertigt. Besonders geeignet sind Messing und Kupfer. Die Metallhülse speichert einen Großteil der bei einem direkten Zellenkurzschluß entstehenden Wärme. Durch die Wirkung der Wärmesenke wird die im Störfall entstehende Wärme auf eine metallische Hülse mit großer Oberfläche gleichmäßig verteilt und von dort durch Abstrahlung und Konvektion nur allmählich an die Umgebung abgegeben.

Vorteilhaft ist weiterhin, wenn die in die Hülse eingesetzte Sekundärzelle eine Standard-Sekundärzelle ist, da dann die Herstellung des Batteriepacks besonders preisgünstig ist. Es wird dann einfach eine im Handel erhältliche Sekundärzelle in die Hülse eingesetzt. Eine teure Sonderanfertigung ist nicht erforderlich. Insbesondere können Standardzellen wie NiCd-Zellen oder Nickel-Metallhydrid-Zellen in die Hülse eingesetzt werden.

Besonders vorteilhaft ist, wenn die Innenwandung der Hülse von der Außenwand der in die Hülse eingesetzten Sekundärzelle durch einen Spalt beabstandet ist. Durch den Spalt und die darin enthaltene Luft kann die Wärme erst allmählich auf die Hülse übertragen werden, so daß bei einer kurzschlußbedingten Zellenentladung die hohen Temperaturen nicht direkt auf die Hülse überfließen. Dies kann noch dadurch verbessert werden, daß in den Spalt eine Wärmewiderstandsmasse, wie zum Beispiel ein schlecht wärmeleitendes Silikon oder Epoxidharz eingebracht wird. Durch diese Maßnahmen kann vorteilhaft erreicht werden, daß auch bei einem direkten Zellenkurzschluß die Oberflächentemperatur des Batteriepacks auf eine für den Einsatzbereich des Gerätes ungefährliche Temperatur begrenzt werden kann.

Vorteilhaft ist weiterhin, wenn an einem der Hülsenöffnung gegenüberliegenden Abschnitt der Innenwandung der Hülse ein Kontaktierungsteil angeordnet ist, welches die in die Hülse eingeschobene zweite Elektrode der Sekundärzelle elektrisch mit der Hülse verbindet. Das Kontaktierungsteil kann als einfaches mit dem Hülsenboden in Kontakt stehenden Federelement ausgebildet sein. Beim Einführen der Sekundärzelle in die Hülse wird durch das Kontaktierungsteil eine zuverlässige Kontaktierung der zweiten Elektrode der Sekundärzelle mit der metallischen Hülsenwand erreicht.

Besonders vorteilhaft ist weiterhin, wenn das Kontaktierungsteil über ein Polymer, dessen elektrische Leitfähigkeit bei zunehmender Erwärmung abnimmt, mit der Hülse verbunden ist. Dadurch wird erreicht, daß im Kurzschlußfall der Stromfluß zwischen Sekundärzelle und Hülse aufgrund der starken Wärmeentwicklung durch das Polymer auf einen ungefährlichen Wert reduziert wird.

### Zeichnung

Ein Ausführungsbeispiel der Erfindung ist in den Zeichnungen dargestellt und wird in der nachfolgenden Beschreibung näher erläutert. Es zeigt
Fig. 1 einen schematischen Querschnitt durch ein Ausführungsbeispiel des erfindungsgemäßen Batteriepacks längs der Linie A-A in Fig. 3,
Fig. 2 eine Seitenansicht des Batteriepacks,
Fig. 3 eine Draufsicht auf den Batteriepack ohne Wärmewiderstandsmasse.

### Beschreibung eines Ausführungsbeispiels

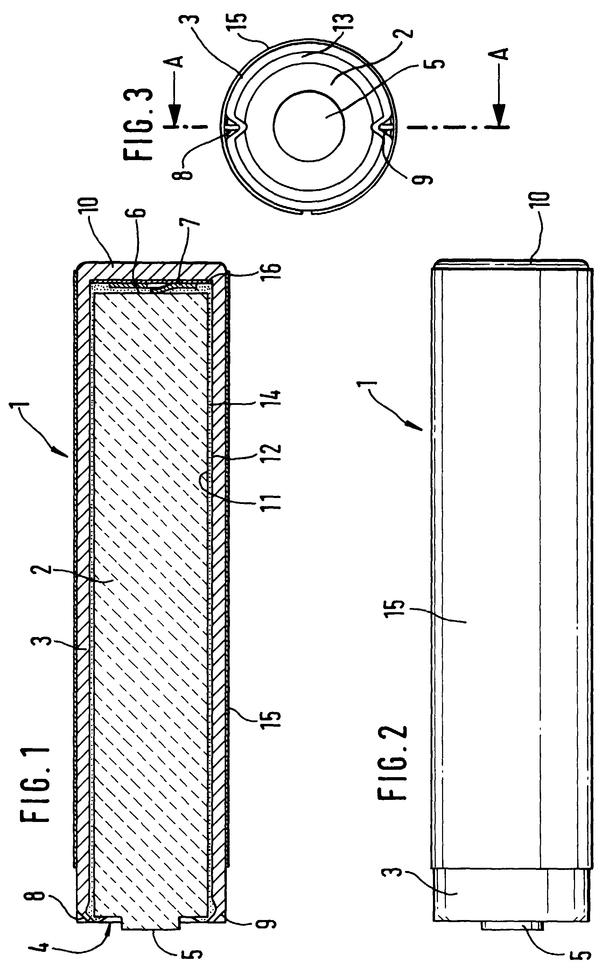

Fig. 1 zeigt eine schematische Darstellung eines Querschnitts durch ein Ausführungsbeispiel des erfindungsgemäßen Batteriepacks. Der radialsymmetrische Batteriepack 1 umfaßt eine hohlzylinderförmige Hülse 3 aus Messing oder Kupfer, deren eine Seite mit einer Öffnung 4 versehen ist und deren andere der Öffnung 4 gegenüberliegende Seite mit einem Bodenteil 10 verschlossen ist. Für die Hülse 3 können auch andere Materialien verwandt werden, die eine große Wärmekapazität aufweisen und einer starken Wärmeentwicklung widerstehen. Die Außenwand der Hülse 3 ist noch mit einem Etikett 15 oder Label versehen.

In dem hier gezeigten Ausführungsbeispiel entspricht der Außendurchmesser der Hülse 3 dem Durchmesser einer Mignon-Zelle nach der internationalen IEC-Norm. Es ist natürlich auch möglich, daß der Außendurchmesser dem Durchmesser einer anderen Standardzelle entspricht. In die Metallhülse 3 ist eine mehrfach aufladbare Sekundärzelle 2 eingesetzt. Als Sekundärzelle wird eine Standard-Sekundärzelle verwandt, deren Außenabmessungen deutlich kleiner als die Innenabmessungen der Hülse sind. Es kann beispielsweise eine NiCd- oder eine Nickel-Metallhydrid-Zelle (NiMH) nach dem IEC-Standard verwandt werden. Eine teure Sonderanfertigung der Sekundärzelle 2 ist somit nicht erforderlich.

An demjenigen Abschnitt der Innenwand der Hülse 3, welcher der Öffnung 4 gegenüberliegt, ist eine Kontaktfeder 7 angeordnet. Die Sekundärzelle 2 wird durch die Öffnung 4 in die Hülse 3 eingeschoben, bis sie mit ihrer in die Hülse eingeführten zweiten Elektrode 6 an der Kontaktfeder 7 zur Anlage gelangt. Durch die Kontaktfeder 7 wird die zweite Elektrode 6 elektrisch mit dem Bodenteil 10 der Hülse 3 kontaktiert. Die nicht in die Hülse eingeführte erste Elektrode 5 steht durch die Öffnung 4 von der Hülse nach außen ab. Durch Zusammendrücken der Kontaktfeder 7 läßt sich die Sekundärzelle 2 noch etwas in die Hülse einschieben, bis die Länge des Batteriepacks 1 vom Bodenteil 10 bis zur ersten Elektrode 5 der Länge einer Standardzelle entspricht (in diesem Beispiel der Länge einer Mignon-Zelle). Durch Verstemmen des oberen, die Öffnung 4 begrenzenden Randes der Hülse 3 an zwei sich einander gegenüberliegenden Bereichen 8 und 9 wird die Sekundärzelle 2 in ihrer Position fixiert. Zwischen der Außenwand 11 der Sekundärzelle 2 und der Innenwandung 12 der Hülse 3 ist ein Spalt 13 vorgesehen. Der Spalt 13 kann teilweise oder vollständig mit einer Wärmewiderstandsmasse 14, beispielsweise einem schlecht wärmeleitenden Silikon oder einem Epoxidharz ausgefüllt werden. Dabei wird so verfahren, daß zunächst die Wärmewiderstandsmasse 14 in die Hülse 3 eingefüllt wird und anschließend die Sekundärzelle 2 in die Hülse eingeführt wird. Die Wärmewiderstandsmasse 14 steigt dann in dem Spalt 13 zwischen Hülse und Sekundärzelle bis zur Öffnung 4 auf. Die Lage der Sekundärzelle in der Hülse wird anschließend fixiert, bis die Wärmewiderstandsmasse 14 ausgehärtet ist. Danach kann der Rand der Hülse an den Stellen 8,9 verstemmt werden, falls die Haftung durch die Vergußmasse für den Verwendungszweck noch nicht ausreichend ist. Der so hergestellte Batteriepack weist die äußeren Abmessungen einer Mignon-Zelle nach internationaler IEC-Norm auf und kann an Stelle einer Primärzelle als Energiequelle in ein elektrisches Gerät eingesetzt werden. Vorteilhaft wird durch den Spalt 13 und insbesondere durch die Wärmewiderstandsmasse 14 erreicht, daß die Wärme im Kurzschlußfall nur langsam auf die Hülse übergeht. Die Spaltbreite und die Wandungsstärke der Hülse werden dabei so aufeinander abgestimmt, daß die Oberflächentempertur der Hülse im Störfall möglichst gering ist. Die Oberflächentemperatur der Hülse kann dabei im Störfall auf Temperaturerhöhungen unterhalb von 45°C beschränkt werden. Die gebremst abgegebene Wärme der Sekundärzelle verteilt sich auf der Hülse und wird dort durch Stahlung und Konvektion erst allmählich an die Umgebung abgegeben.

Die Größe der Sekundärzelle 2 in Fig. 1 ist kleiner als die Größe einer Primärzelle, welche in ihren äußeren Abmessungen dem Batteriepack 1 entspricht. Die Sekundärzelle weist deshalb auch eine kleinere elektrische Ladung auf, beispielsweise nur etwa 66% der elektrischen Ladung (Kapazität) einer Mignon-Zelle. Der Verlust an Kapazität wird aber aufgewogen durch die Vorteile, daß der Batteriepack optional an Stelle einer Standardzelle in ein elektrisches Gerät eingesetzt werden kann und daß gleichzeitig ein zuverlässiger Explosionsschutz der inneren Sekundärzelle 2 des Batteriepacks gegeben ist.

Weiterhin ist vorgesehen, zwischen Kontaktfeder 7 und Boden der Hülse 3 ein Polymer 16 anzuordnen, dessen elektrische Leitfähigkeit sich bei Wärmeentwicklung verringert. Im Kurzschlußfall führt der starke Stromfluß durch die Zelle zu einer Erwärmung des Polymers 16, dessen elektrischer Widerstand ansteigt, bis der Stromfluß auf einen ungefährlichen Wert reduziert ist.

## Patentansprüche

1. Batteriepack mit wenigstens einer in einem Schutzbehältnis (3) angeordneten elektrochemischen Sekundärzelle (2), **dadurch gekennzeichnet,** daß als Schutzbehältnis eine mit einer Öffnung (4) versehene Hülse (3) vorgesehen ist und daß eine elektrochemische Sekundärzelle (2) in die Hülse (3) derart eingesetzt ist, daß eine erste Elektrode (5) der Sekundärzelle (2) an der Öffnung (4) von außen kontaktierbar ist, wobei die Abmessungen des aus Hülse (3) und Sekundärzelle (2) gebildeten Batteriepacks (1) den Abmessungen einer elektrochemischen Standard-Primärzelle oder Standard-Sekundärzelle entsprechen.

2. Batteriepack nach Anspruch 1, **dadurch gekennzeichnet,** daß die Abmessungen des Batteriepacks (1) den Abmessungen einer elektrochemischen Standardzelle nach internationaler IEC-Norm entsprechen.

3. Batteriepack nach Anspruch 1, **dadurch gekennzeichnet,** daß die Hülse (3) aus Metall gefertigt ist.

4. Batteriepack nach Anspruch 2, **dadurch gekennzeichnet,** daß die Hülse (3) aus Messing oder Kupfer gefertigt ist.

5. Batteriepack nach Anspruch 1, **dadurch gekennzeichnet,** daß die in die Hülse (3) eingesetzte Sekundärzelle (2) eine Standard-Sekundärzelle ist.

6. Batteriepack nach Anspruch 1, **dadurch gekennzeichnet,** daß die in die Hülse (3) eingesetzte Sekundärzelle (2) eine NiCd-Zelle oder eine Nickel-Metallhydrid-Zelle ist.

7. Batteriepack nach Anspruch 1, **dadurch gekennzeichnet,** daß die Innenwandung (12) der Hülse von der Außenwand (11) der in die Hülse (3) eingesetzten Sekundärzelle (2) durch einen Spalt (13) beabstandet ist.

8. Batteriepack nach Anspruch 7, **dadurch gekennzeichnet,** daß in den Spalt (13) zumindest teilweise eine Wärmewiderstandsmasse (14) eingebracht ist.

9. Batteriepack nach Anspruch 8, **dadurch gekennzeichnet,** daß die Wärmewiderstandsmasse (14) ein Epoxidharz oder ein schlecht wärmeleitendes Silikon ist.

10. Batteriepack nach Anspruch 1, **dadurch gekennzeichnet,** daß die Hülse (3) die Form eines Hohlzylinders aufweist, dessen eines Ende durch ein Bodenteil (10) verschlossen ist und an dessen dem Bodenteil (10) gegenüberliegenden Ende eine Öffnung (4) zum Einführen der Sekundärzelle (2) vorgesehen ist.

11. Batteriepack nach Anspruch 3, **dadurch gekennzeichnet,** daß an einem der Öffnung (4) gegenüberliegenden Abschnitt der Innenwandung (12) der Hülse ein Kontaktierungsteil (7) angeordnet ist, welches die in die Hülse (3) eingeschobene zweite Elektrode (6) der Sekundärzelle (2) elektrisch mit der metallischen Hülse verbindet.

12. Batteriepack nach Anspruch 11, **dadurch gekennzeichnet,** daß das Kontaktierungsteil (7) ein Federelement ist.

13. Batteriepack nach Anspruch 11 oder 12, **dadurch gekennzeichnet,** daß das Kontaktierungsteil (7) über ein Polymer (16), dessen elektrische Leitfähigkeit bei zunehmender Erwärmung abnimmt, mit der Hülse (3) verbunden ist.
